# EUROPEAN PATENT APPLICATION

(11) **EP 1 422 905 A2**
(43) Date of publication of application: **26.05.2004**
(21) Application number: 03026146.5
(22) Date of filing: 13.11.2003
(51) Int. Cl.: H04L 29/06, H04M 1/725

(54) **Communication terminal apparatus and data transmission method**

(30) Priority: 22.11.2002 JP 2002339231
(71) Applicant: MATSUSHITA ELECTRIC INDUSTRIAL CO., LTD., Kadoma-shi, Osaka 571-8501 (JP)
(72) Inventor: Morita, Junichi, Hachioji-shi Tokyo 193-0823 (JP); Ogasawara, Noritoshi, Tokyo 158-0093 (JP); Ura, Seiji, Osaka-shi Osaka 533-0006 (JP)
(74) Representative: Grünecker, Kinkeldey, Stockmair & Schwanhäusser Anwaltssozietät

(57) **Abstract**

A communication terminal apparatus whereby data communication and service switching can be performed taking security into consideration, and without an application performing complex circuit connection control. In this apparatus, port number checker 260 refers to port number DB 270 and checks whether a port number included in user information transmitted from application 100 is an appropriate one. Port number DB 270 memorizes destination port numbers and communication protocols in correspondence. Port number DB 270 memorizes only those appropriate port numbers that application 100 is allowed for use and the corresponding communication protocols. U-plane monitor 280 monitors all ports of TCP/IP, detects transmission of user information from application 100, and reports a port number included in the header to port number checker 260.

## Description

### BACKGROUND OF THE INVENTION

### Field of the Invention

The present invention relates to a communication terminal apparatus and a data transmission method.

### Description of the Related Art

Recently, the complexity of applications on communication terminals such as mobile telephones and fixed terminals has increased much to support various telecommunication services. For this reason, emphasis is given on such communication terminals (middleware layer) that are positioned between the application and the call processor and that execute circuit connection control in accordance with command issued from the application and reduce the development load of circuit connection control by the application.

That is, for instance, applications such as the browser and mailer should ideally be able to perform communication using specific protocols including TCP (Transmission Control Protocol) and IP (Internet Protocol) without regard to circuit connection control.

As an example of such mechanism that does not take circuit connection control into account, a method has been disclosed whereby a service request from an application is monitored by means of a port such as a TCP layer and a communication terminal apparatus establishes circuit connection to a communication terminal station based on detection of the service request, and start communication (see for instance Laid-Open Japanese Patent Application Publication No.HEI11-340986, paragraphs 0046-0050).

However, a conventional communication apparatus such as described above has the problem that, when an application specifies a wrongful port number and requests a service, the communication terminal apparatus detects the issuance of the service request and starts communication. In particular, when the communication terminal apparatus features an OS (Operating system) that is allowed to be modified and redistributed freely like Linux, it can be imagined that many third vendors will develop original applications, and when an application specifies a wrongful port number and still starts communication, this results in a big security problem.

Furthermore, with conventional communication apparatus, when an application switches between a number of services, circuit connection control for the switching of telecommunication services (cut one service and then start another service) needs to be executed, and this has been a big burden on application developers.

### SUMMARY OF THE INVENTION

It is therefore an object of the present invention to execute data communication and service switching that takes security into consideration without having an application execute complex circuit connection control.

The present invention achieves the above object, by monitoring data transmission to the communication destination station by an application, by judging, when data transmission occurs, whether the port number included in the header of the data is a relevant one that supports the communication protocol, and by starting communication only when the port number thereof is an appropriate one.

According to one aspect of the present invention, there is provided a communication terminal apparatus that executes a circuit connection upon request from at least one user using telecommunication services, the apparatus comprising a detector that detects a start of user information transmission by the user, a status manager that performs status management of the user performing the user information transmission, and a circuit controller that performs a circuit control including a circuit connection and cut based on a circuit connection request from the user, wherein, upon detection of the start of the user information transmission by the detector, the status manager checks a circuit connection status of the user, and wherein, when the check result by the status manager shows no circuit connection, the circuit controller establishes a connection to perform the user information transmission.

According to another aspect of the present invention, there is provided a communication terminal apparatus that executes a circuit connection upon request from at least one user using telecommunication services, the apparatus comprising a status manager that performs status management of a user transmitting user information, and a circuit controller that performs a circuit control including a circuit connection and cut based on a circuit connection request form the user, wherein the status manager checks a circuit connection status of the apparatus when a request for forced connection is issued from the user, and wherein, when the check result by the status manager shows a circuit connection in progress, the circuit controller cuts the connection and establishes a connection for the user.

According to yet another aspect of the present invention, there is provided a communication terminal apparatus that transmits user information including a destination service identifier, the identifier being for identifying a service to request from a communication destination station, the apparatus comprising a memory that memorizes in advance a destination service identifier corresponding to a service allowed for use, a detector that detects a start of user information transmission, a checker that, upon detection of the start of the user information transmission, checks as to whether the destination service identifier included in the user information and the destination service identifier included in the memory match, and an establisher that, only when the two destination service identifiers match, establishes a connection by processing control information for the user information transmission.

According to yet another aspect of the present invention, there is provided a data transmission method that transmits user information including a destination service identifier, the identifier being for identifying a service to request from a communication destination station, the method comprising the steps of detecting a start of user information transmission, checking, upon detection of the start of the user information transmission, whether the destination service identifier included in the user information and the destination service identifier corresponding to a service allowed for use match, and establishing a connection by processing control information for the user information transmission only when the two destination service identifiers match.

### BRIEF DESCRIPTION OF THE DRAWINGS

The above and other objects of the present invention will appear more fully hereinafter from a consideration of the following description taken in connection with the accompanying drawing wherein one example is illustrated by way of example, in which:
FIG.1 is a block diagram showing a configuration of a communication terminal apparatus according to the first embodiment of the present invention;
FIG.2 is a sequence diagram illustrating the operation of a communication terminal apparatus according to the first embodiment;
FIG.3 is a drawing showing an example of a port number database according to the first embodiment;
FIG.4 is a drawing showing an example of a connection information database according to the first embodiment; and
FIG.5 is a sequence diagram illustrating the operation of a communication terminal apparatus according to the second embodiment.

### DETAILED DESCRIPTION OF THE PREFERRED EMBODIMENTS

With reference to the accompanying drawings now, embodiments of the present invention will be described in detail. The present invention is by no means limited to the following embodiments and is implementable in various other forms without departing from the scope of the invention.

### (First Embodiment)

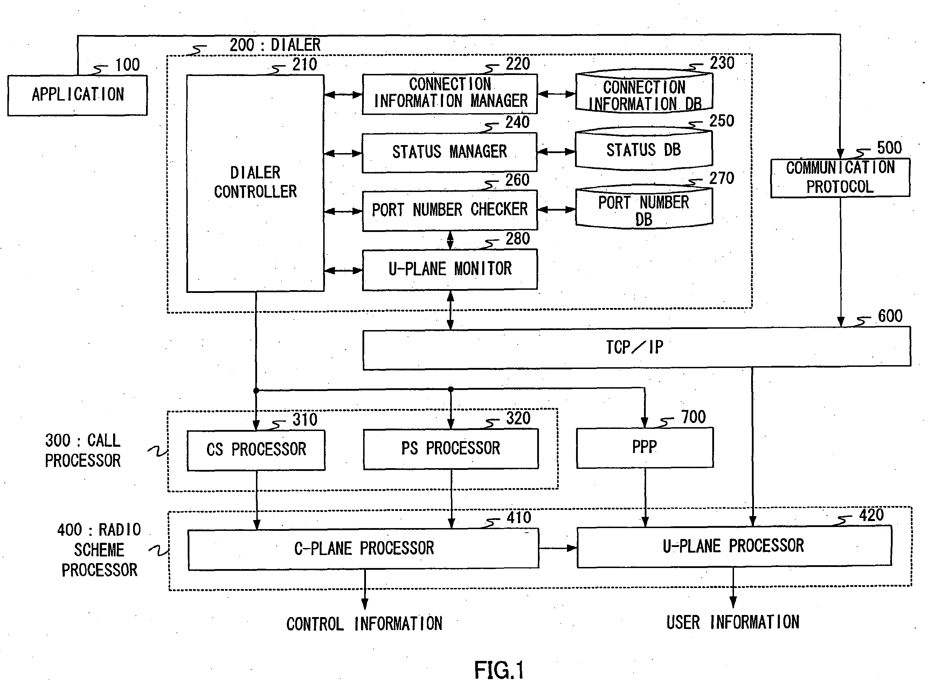

FIG. 1 is a block diagram showing a configuration of a communication terminal apparatus according to the first embodiment of the present invention. The communication terminal apparatus shown in the drawing comprises application 100, dialer 200, call processor 300, radio scheme processor 400, communication protocol 500, TCP/IP (Transmission Control Protocol/Internet Protocol) 600, and PPP (Point to Point Protocol) 700.

Application 100 refers to an application such as a browser and mailer, and transmits user information by means of communication protocol 500. The user information here refers to information for establishing communication with the communication destination station other than control information, and is generated by application 100. Application 100 includes one or a plurality of applications.

Dialer 200 comprises dialer controller 210, connection information manager 220, connection information database (DB) 230, status manager 240, status database (DB) 250, port number checker 260, port number database (DB) 270, and U-plane (User plane) monitor 280.

Dialer controller 210 controls the operation of connection information manager 220, status manager 240, port number checker 260, and U-Plane monitor 280 together. When notified from port number checker 260 that a wrongful port number is specified, dialer controller 210 shuts out communication. On the other hand, when notified that an appropriate port number is specified, dialer controller 210 controls call processor 300 and PPP 700 so as to implement processing for establishing communication.

In accordance with the type of connection requested from application 100, connection information manager 220 acquires information in regard to the connection from connection information DB 230. To be more specific, from connection information DB 230, connection information manager 220 acquires information about the radio schemes and bearers corresponding to the connection requested from application 100.

Connection information DB 230 memorizes information that corresponds respectively to the types of connection requested from application 100.

Status manager 240 registers the communication status of the apparatus in status DB 250 on a per application basis in application 100, and, when necessary, refers to status DB 250 and reports the communication status of the apparatus to another processor (not shown in drawing). To be more specific, status manager 240 registers the communication status of the apparatus such as "Communicating" and "Waiting" and so forth in status DB 250, and, when it becomes necessary in another processing circuit (not shown in drawing) to know the communication status of the apparatus, reads out these communication status from status DB 250, and reports them to the processor.

Status DB 250 memorizes the communication status of the apparatus on a per application basis in application 100.

Port number checker 260 refers to port number DB 270 and checks as to whether the port number included in the header of the user information transmitted from application 100 is an appropriate one. Moreover, port number checker 260 reports the check result to dialer controller 210.

Port number DB 270 memorizes the port numbers (hereinafter "destination port number") and communication protocols at the communication destination station in correspondence. In port number 270, only those appropriate destination port numbers that application 100 is allowed to use and the corresponding communication protocols are memorized.

U-plane monitor 280 monitors all ports of TCP/IP 600, and detects transmission of user information from application 100. Moreover, U-plane monitor 280, when detecting transmission of user information, extracts the port number included in the header and reports it to port number checker 260.

Call processor 300 comprises CS (Circuit Switch) processor 310 and PS (Packet Switch) processor 320.

CS processor 310 performs predetermined processing for performing communication under a circuit switching scheme.

PS processor 320 performs predetermined processing for performing communication under a packet switching scheme.

Incidentally, the processings in CS processor 310 and PS processor 320 are processings of the C-plane (Control plane) whereby control information is subject to signaling.

Radio scheme processor 400 comprises C-Plane processor 410 and U-Plane processor 420. According to the radio scheme, radio scheme processor 400 performs C-plane processing whereby control information is signaled and U-plane processing whereby user information is transferred.

The radio scheme may be, for instance, W-CDMA (Wideband-Code Division multiplex Access), PDC (Personal Digital Cellular), and GSM (Group Special Mobile).

In accordance with the processing by CS processor 310 and PS processor 320, C-plane processor 410 performs C-plane processing that subjects control information to signaling, and establishes connection thus.

Using the connection established by C-Plane processor 410, U-plane processor 420 transfers the user information generated in application 100. The user information handled in U-plane processor 420 includes, for instance, speech and packets.

Communication protocol 500 is a protocol such as, for instance, HTTP (HyperText Transfer Protocol) and SMTP (Simple Mail Transfer Protocol), supports application 100, and utilizes TCP/IP 600 in the lower layer. Communication protocol 500 attaches a header that includes the destination port number, to the user information generated in application 100.

TCP/IP 600 is a protocol in the network layer and the transport layer of the OSI (Open Systems Interconnection) reference model, and the user information, attached with a header by communication protocol 500, is further attached a TCP header and an IP header.

PPP 700 is a protocol that connects the communication terminal apparatus to a network via a telephone circuit.

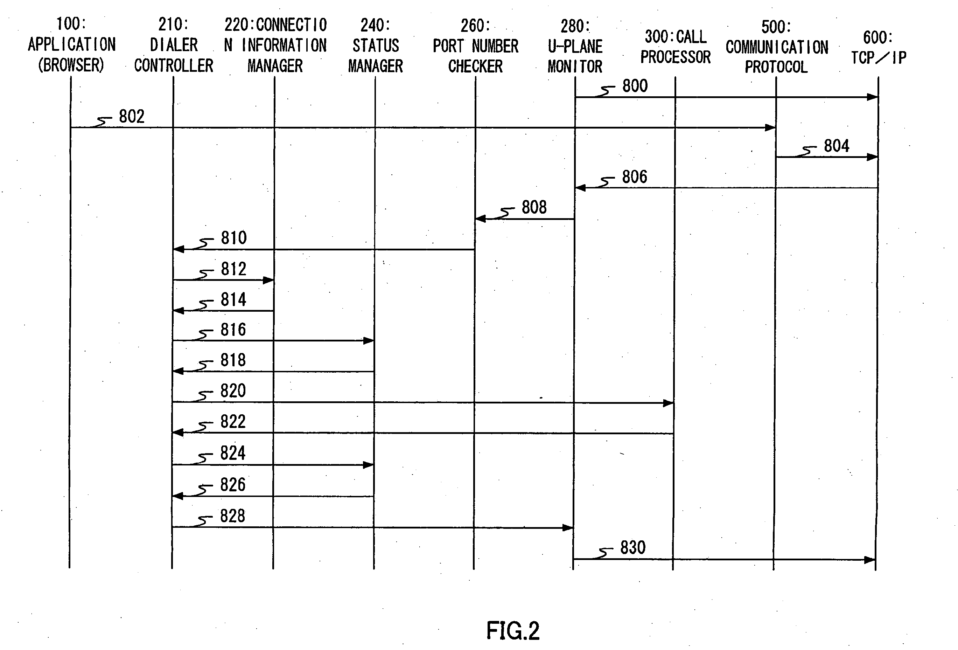

Next, the operation upon starting data transmission by the above-configured communication terminal apparatus will be explained with reference to the sequence diagram shown in FIG.2. In the following explanation, application 100 is a browser, communication protocol 500 is HTTP, and the radio scheme handled in radio scheme processor 400 is W-CDMA.

First, before communication operation starts (for instance, when dialer 200 is activated) , U-plane monitor 280 monitors all ports of TCP/IP 600 (800).

Then, when application (browser) 100 starts transmitting user information, communication start notification 802 is transmitted from application (browser) 100 to communication protocol 500 (HTTP). When communication protocol 500 (HTTP) receives communication start notification 802, communication start notification 804 is then transmitted from communication protocol 500 (HTTP) to TCP/IP 600.

Then, when the reception of communicant start notification 804 from TCP/IP 600 is detected by U-plane monitor 280, destination port number 806 is extracted by U-plane monitor 280 from the header of the user information that is transmitted.

Incidentally, although in this context U-plane monitor 280 is configured to detect data delivery to all ports of TCP/IP 600, that is, from communication protocol 500 (HTTP) to TCP/IP 600, it is equally possible to detect data delivery from TCP/IP 600 to U-plane processor 420.

To detect delivery from communication protocol 500 (HTTP) to TCP/IP 600, it is possible to detect the start of transmission of user information in earlier stage. Moreover, when detecting delivery from TCP/IP 600 to U-plane processor 420, U-plane monitor 280 monitors only one port so that processing load can be reduced.

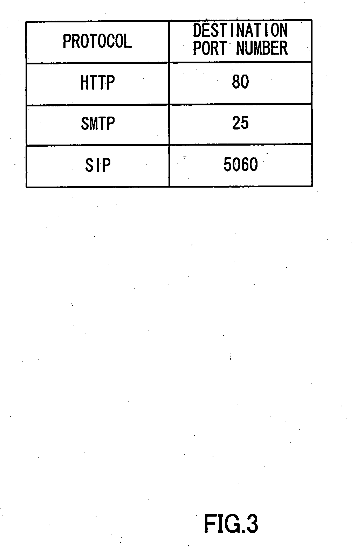

Then, destination port number 808 extracted by U-plane monitor 280 is output to port number checker 260. When destination port number 808 is output, port number checker 260 makes reference to port number DB 270 such as shown in FIG.3 and checks as to whether or not this destination port number 808 is an appropriate one. To be more specific, destination port number 808 is compared to the port numbers memorized in port number DB 270, and when there is a matching one, destination port number 808 is determined appropriate, and when there is no matching one, destination port number 808 is determined inappropriate.

Here, when destination port number 808 is determined to be an inappropriate one, dialer controller 210 is notified to that effect, and communication is shut out by dialer controller 210. By this means, it is possible to prevent other applications than application 100 (browser) from starting illegitimate connection, thus security can be improved.

Moreover, when destination port number 808 is determined to be an appropriate one, C-plane connection request 810 is output from port number checker 260 to dialer controller 210. Then, C-plane processing will be performed by dialer controller 210 as follows.

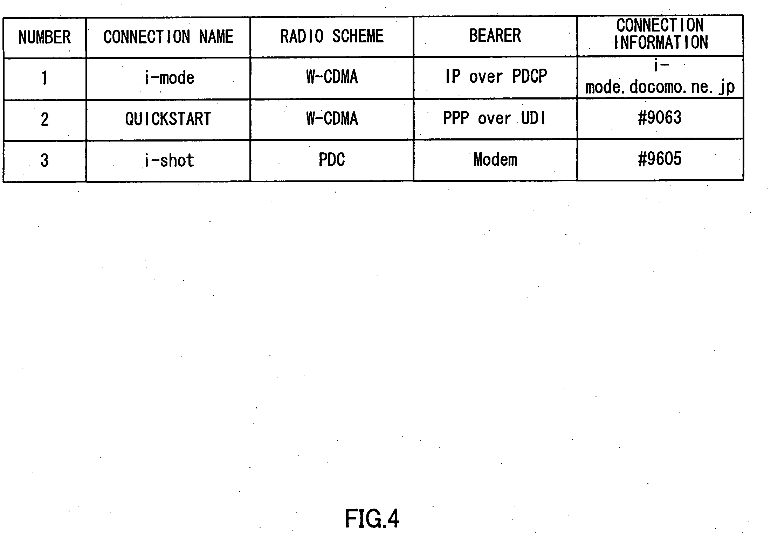

First, connection information request 812 is transmitted to connection information manager 220, and connection information manager 220 refers to connection information DB 230 such as shown in FIG. 4, so as to acquire connection information. In this context, from connection information DB 230 shown in FIG.4, the radio scheme of W-CDMA and the bearer of IP over PDCP (Packet Data Convergence Protocol) are acquired. Then, acquired connection information 814 is transmitted to dialer controller 210.

Next, dialer controller 210 transmits status setup request 816 to status manager 240, and status manager 240 checks the circuit connection status, and when there is no circuit connection then, communication status such as "Application 100 (browser) is transmitting a packet switch call" is set in status DB 250. Then, dialer controller 210 is notified to the effect that status setup is complete (818).

Furthermore, dialer controller 210 transmits C-plane connection request corresponding to connection information 814 to call processor 300, and predetermined processing is performed in CS processor 310 and PS processor 320 in call processor 300.

Then, connection request 820 of the C-plane of a packet switch call is transmitted from dialer controller 210, and PS processor 320 controls C-plane processor 410 in radio scheme processor 400 and executes C-plane connection of the packet switch call. When the C-plane connection is thus complete, connection completion notification 822 is transmitted to dialer controller 210.

Then, dialer controller 210 transmits status setup request 824 to status manager 240, and status manager 240 sets the communication status such as "Application 100 (browser) is transmitting a packet switch call" in status DB 250. Then, dialer controller 210 is notified to the effect that the status setup is complete (826).

Processing in the C-plane is completed thus, and U-plane monitor 280 is notified by dialer controller 210 that C-plane connection is complete (828). Then, when U-plane monitor 280 outputs data transmission start notification 830 to TCP/IP 600, transmission of user information starts via U-plane processor 420.

Thus, according to the present embodiment, the transmission of user information is monitored. That is, data transmission in the U-plane is monitored, and upon detection of data transmission, a check is performed as to whether the destination port number included in the header of the data is an appropriate port number that is authorized, and communication is started only when the port number is an appropriate one, so that it is possible to prevent the transmission of data that specifies an illegitimate destination port number, and improve security thus.

Incidentally, although the first embodiment is configured such that port number checker 260 performs the port number check so as to allow the transmission of user information, status manager 240 checks the circuit connection status, and C-plane connection is executed when there is no circuit connection, it can be readily conceived that such configuration in which status manager 240 adopts the function (communication permit authorizing function) of port number checker 260 achieves the same effect.

Moreover, although according to the first embodiment the communication permit authorizing function performed by dialer 200 is a security check by the port number, it can be readily conceived that such configuration in which call processor 300 tolerates a number of circuit connections (multi-call supporting configuration) and status manager 240 compares the number of circuit connections tolerated and the number of current circuit connections to permit new circuit connections, also makes it possible to make various decisions in regard to communication permit.

### (Second Embodiment)

In this embodiment, the operation of the communication terminal apparatus shown in FIG. 1 will be described, where application 100 comprises a plurality of applications and the services by the applications are switched. Therefore, the configuration of the communication terminal apparatus according to the present embodiment is identical to that of FIG. 1, and explanation thereof will be omitted.

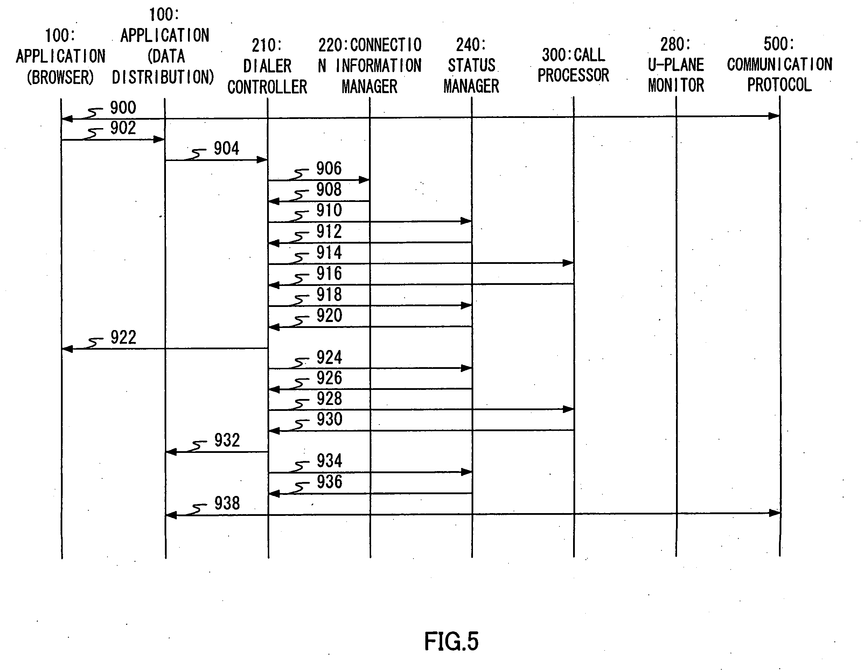

FIG.5 is a sequence diagram illustrating the operation of a communication terminal apparatus according to the present embodiment. In the following description, the application of application 100 switches from a browser, a type of packet switch service, to a data distribution service, a type of circuit switch service, and communication protocol 500 that the browser utilizes is HTTP.

First, assume that application 100 (browser) uses communication protocol 500 (HTTP) and executes content acquisition 900 by means of IP over PDCP. For instance, when the user of the communication terminal apparatus clicks on a menu on application 100 (browser), the start of application 100 (data distribution) is specified.

Then, from data application 100 (browser) to application 100 (data distribution) data distribution service startup 902 is sent. Application 100 (data distribution) receives data distribution service startup 902 and transmits connection request 904 for data distribution service to dialer controller 210.

Then, dialer controller 210 transmits connection information request 906 including parameter that indicates forced connection to connection information manager 220, and connection information is acquired from connection information DB 230. For instance, PPP over UDI (Unrestricted Digital Information) is obtained as a bearer, and connection information 908 that is acquired is transmitted to dialer controller 210.

Next, dialer controller 210 transmits status setup request 910 to status manager 240. Provided that application 100 (browser) is transmitting a packet switch call, when status manager 240 refers to status DB 250, for instance, communication status 912 such as "Application 100 (browser) is communicating a packet switch call" is returned to dialer controller 210.

Since application 100 (browser) is transmitting a packet switch call, dialer controller 210 executes C-plane processing that cuts this connection.

That is, packet switch call cut request 914 is transmitted to call processor 300, predetermined processing is performed by PS processor 320 in call processor 300, the transmission of the packet switch call is cut, and cut completion notification 916 is returned to dialer controller 210.

Upon reception of cut completion notification 916, dialer controller 210 again transmits status setup request 918 to status manager 240, and status manager 240 sets communication status such as "Packet switch call by application 100 (browser) is cut" in the status DB 250. Then, dialer controller 210 is notified to the effect that the status setup is complete (920).

In response to this, packet communication cut completion notification 922 is transmitted from dialer controller 210 to application 100 (browser), and application 100 (browser) enters idle state and dialer controller 210 transmits status setup request 924 to status manager 240 to start a circuit switch call for data telecommunication service by application 100 (data distribution) , and status manager 240 sets communication status such as "Application 100 (data distribution) is transmitting a circuit switch call" in status DB 250. Then, dialer controller 210 is notified to the effect that the status setup is complete (926).

Furthermore, dialer controller 210 transmits C-plane connection request 928 corresponding to already acquired connection information 908, and CS processor 310 and PS processor 320 in cal processor 300 each perform predetermined processing. In this context, for instance, dialer controller 210 transmits C-Plane connection request 928 of a circuit switch call, and CS processor 310 controls C-plane processor 410 in radio scheme processor 400 to execute C-plane connection. When the C-Plane connection is complete, connection completion notification 930 is transmitted to dialer controller 210.

Then, application 100 is notified by dialer controller 210 that the connection of a circuit switch call to application 100 (data distribution) is complete (932), while status setup request 934 is transmitted to status manager 240, and status manager 240 sets communication status such as "Application 100 (data distribution) is transmitting a circuit switch call" in status DB 250. Then, dialer controller 210 is notified to the effect that the status setup is complete (936).

By this means, application 100 (data distribution) receives the data distribution service (PPP over UDI) and starts content acquisition 938.

Thus, according to the present embodiment, when the communication terminal apparatus has a plurality of applications and the services by the applications are switched, each application can complete and start communication individually without regard to the communication status of the others, so that the switching of services can be executed automatically.

Although with the second embodiment the switching of services from a packet switch service (IP over PDCP) to a circuit switch service (PPP over UDI) was explained, it can be readily conceived that switching between different switch services such as from a circuit switch service to a packet switch service, and switching to different bearer services of same switch services (from a circuit switch service to a circuit switch service, from a packet switch service to a packet switch service, and so on) are also possible.

Although with the second embodiment switching of services by multiple applications was explained, it can be readily conceived that the same configuration enables one application to switch between a number of services.

Although the second embodiment is configured such that aconnectioninformation request including parameter indicating forced connection is used as a command to request service switching from an application to dialer 200, it is readily conceivable that, even when a command that specifies an identifier indicating the service currently connected and no yet needed to be cut, the same configuration enables service switching.

Moreover, although the above embodiments are configured to use TCP/IP, using UDP/IP can likewise achieve the same effect by monitoring all ports of TCP/IP and checking as to whether the port number included in the header is appropriate. Although the description was given in view of the HTTP communication protocol, any protocol comprising IP signaling protocol such as SIP ( Session Initiation Protocol) , which uses TCP/IP ( UDP/IP ) , and H.323, are also applicable.

Although the above embodiments were described to be conf igured to establish connection by means of C-plane processing after a dialer detects a start of user information transmission, that is, C-plane processing is triggered by the start of U-plane processing, the dialer described in the above embodiments is able to operate to start U-plane processing that transmits user information after connection has been established by means of C-plane processing.

As described above, the present invention makes it possible to perform data communication and service switching taking security into consideration without an application performing complex circuit connection.

The communication terminal apparatus of the present invention is configured to perform circuit control upon request from at least one user using telecommunication services, and has a detector that detects a start of user information transmission by the user, a status manager that performs status management of the user performing the user information transmission, and a circuit controller that performs a circuit control including a circuit connection and cut based on a circuit connection request from the user. In this apparatus, the status manager checks a circuit connection status of the user upon detection of the start of the user information transmission by the detector, and, when the check result by the status manager shows no circuit connection, the circuit controller establishes a connection and performs the user information transmission.

The above configuration detects a start of transmission of user information, checks the circuit connection status of the user, and, if this check result shows no connection in progress, establishes a connection and transmits user information, so that it is possible to monitor data transmission from the user with certainty and, when the circuit is not connected, automatically perform circuit connection for data transmission.

The present invention is by no means limited to the above described embodiments, and various variations and modifications may be possible without departing from the scope of the present invention.

The present application is based on Japanese Patent Application No.2002-339231 filed on November 22, 2002, entire content of which is expressly incorporated herein by reference.

## Claims

1. A communication terminal apparatus that executes a circuit connection upon request from at least one user using telecommunication services, said apparatus comprising;
a detector(280) that detects a start of user information transmission by the user;
a status manager(240) that performs status management of the user performing the user information transmission; and
a circuit controller(210) that performs a circuit control including a circuit connection and cut based on a circuit connection request from the user,
wherein, upon detection of the start of the user information transmission by the detector (280) , the status manager(240) checks a circuit connection status of the user; and
wherein, when the check result by the status manager(240) shows no circuit connection, the circuit controller(210) establishes a connection to perform the user information transmission.

2. A communication terminal apparatus that executes a circuit connection upon request from at least one user using telecommunication services, said apparatus comprising;
a status manager(240) that performs status management of a user transmitting user information; and
a circuit controller(210) that performs a circuit control including a circuit connection and cut based on a circuit connection request form the user,
wherein the status manager(240) checks a circuit connection status of the apparatus when a request for forced connection is issued from the user; and
wherein, when the check result by the status manager(240) shows a circuit connection in progress, the circuit controller(210) cuts the connection and establishes a connection for the user.

3. A communication terminal apparatus that transmits user information including a destination service identifier, said identifier being for identifying a service to request from a communication destination station, said apparatus comprising;
a memory(270) that memorizes in advance a destination service identifier corresponding to a service allowed for use;
a detector(280) that detects a start of user information transmission;
a checker(260) that, upon detection of the start of the user information transmission, checks as to whether the destination service identifier included in the user information and the destination service identifier included in the memory(270) match; and
an establisher(210) that, only when the two destination service identifiers match, establishes a connection by processing control information for the user information transmission.

4. The communication terminal apparatus of claim 1,
wherein the detector(280) comprises a monitor(280) that monitors the presence and absence of user information in TCP/IP or UDP/IP; and
wherein the monitor(280) monitors all ports of TCP/IP or UDP/IP.

5. The communication terminal apparatus of claim 3,
wherein the detector(280) comprises a monitor that monitors the presence and absence of user information in TCP/IP or UDP/IP; and
wherein the monitor(280) monitors all ports of TCP/IP or UDP/IP.

6. The communication terminal apparatus of claim 1,
wherein the detector(280) comprises a monitor(280) that monitors the presence and absence of user information in TCP/IP or UDP/IP; and
wherein the monitor(280) monitors output from TCP/IP or UDP/IP.

7. The communication terminal apparatus of claim 3,
wherein the detector(280) comprises a monitor(280) that monitors the presence and absence of user information in TCP/IP or UDP/IP; and
wherein the monitor(280) monitors output from TCP/IP or UDP/IP.

8. A data transmission method that transmits user information including a destination service identifier, said identifier being for identifying a service to request from a communication destination station, said method comprising the steps of:
detecting a start of user information transmission;
checking, upon detection of the start of the user information transmission, whether the destination service identifier included in the user information and the destination service identifier corresponding to a service allowed for use match; and
establishing a connection by processing control information for the user information transmission only when the two destination service identifiers match.
